# EUROPEAN PATENT APPLICATION

(11) **EP 4 737 975 A1**
(43) Date of publication of application: **06.05.2026**
(21) Application number: 24210649.0
(22) Date of filing: 04.11.2024
(51) Int. Cl.: G02B 21/24, G02B 21/02, G01N 15/1434, G02B 21/00, G01N 15/00, A61B 1/00

(54) **OBJECTIVE LENS UNIT FOR A MICROSCOPE, MICROSCOPE COMPRISING THE OBJECTIVE LENS UNIT, AND METHODS OF PERFORMING CYTOMETRY**

(71) Applicant: Mettler-Toledo GmbH, 8606 Greifensee (CH)
(72) Inventor: Link, Sandro, 8308 Illnau (CH); Gati, Rudolf, 5507 Mellingen (CH)
(74) Representative: Mettler-Toledo

(57) **Abstract**

An objective lens unit (6) for a microscope is disclosed. The objective lens unit is suitable to be used when at least partially submerged in a liquid sample. The objective lens unit comprises an immersion lens (64, 642) positioned adjacent a distal front end (62) of the enclosure of the objective lens unit. The immersion lens is arranged and configured to receive light through a front end optical aperture (63). An objective lens system (65, 66) is arranged inside an enclosure (61) and proximal from the immersion lens (64, 642). The objective lens system is configured to collect light received by the immersion lens (64, 642) through the front end optical aperture (63). The objective lens system comprises a motorless automated adjustable lens (65), in particular a tuneable lens, configured to amend the focal length of the objective lens system relative to the immersion lens.

## Description

### Technical Field

The herein claimed subject matter relates generally to instruments and methods applicable for in-situ cytometry. More in particular, it relates to the subject matter set forth in the claims.

### Background Art

Cytometry is applied to characterize biological cells, living or death. Image cytometers do so by analyzing images of cells. The objective lens unit according to the invention is preferably used in an image cytometer. Preferably, for the cytometry using the objective lens unit according to this invention, the cells are in a liquid. For instance, density, size and morphology of cells may be determined by microscopy. In the absence of reliable and quantitative in-line measurement methods, bioengineers have to take samples to perform cytometry with off-line measurement devices. This requires taking a sample volume of the bioreactor within certain intervals, which increases the risk of contamination. In addition, it is time-consuming and due to the sparse interval, little statistics and no live information about cytometry is available to the operator. An in-line cytometer, characterizing the biological cells in the, typically liquid, environment in which they are cultivated, would drastically reduce the complexity compared to off-line methods and would allow the process controller to monitor the cell count and cell characteristics, such as the ones named above, close to real-time.

Bioprocesses are processes which use complete living, biological cells or their components such as for example bacteria, enzymes or chloroplasts, to obtain desired products. A bioprocess is typically done in a bioreactor, i.e. a process vessel which is preferably either reusable and therefore sterilizable tank or a single-use bag. The biological cells being part of the bioprocesses are dispensed in a liquid medium, establishing thereby the suitable environment for the desired process. Typically, the medium comprises for example nutrients for the cells in question as well as gases needed by them such as O2 and CO2. In most cases, it is important to ensure that no cells other than the ones involved in the bioprocess are present in the bioreactor, implying that it is preferred to maintain a sterile barrier between the process and the outside as long as possible thereby minimizing the number and duration of occasions where a contamination with unwanted cells can happen. Often, the bioprocess uses a means to mix the cells and the medium constantly. Examples of such means are stirrers arranged on the inside of the bioreactor or shakers which move the whole bioreactor. Therefore, in general, the cells suspended in the media are moving inside the bioreactor. In many cases, the medium is closely monitored to ensure that the desired conditions are maintained. For this monitoring, there are today different optical, opto-chemical and electrochemical sensors available and in use which can measure for example the pH-value or the amount of dissolved oxygen in-line or in-situ in a reliable manner. There is, however, currently no similar reliable measurement device available to monitor the cells directly.

In-line or in-situ measurements are - in the case of a process, in particular a bioprocessmeasurements which take place directly in the reactor respectively in the bioreactor or in a tube transporting the fluid to be monitored. In particular the fluid to be monitored can be the liquid of the bioprocess comprising the medium and the biological cells.

There have been attempts to build a sensor capable of in-line cytometry by building an in-situ microscope and recording live images of biological cells. However, to get a cell count per volume, one must define a volume within the process. First commercial attempts tried to mechanically confine a small volume by opening and closing a mechanical chamber within the bio process. The mechanical movement and the limited precision in defining the volume hindered the sensor to perform accurate and reliable under real process conditions. Another approach used an objective that includes a spherical solid immersion lens, so-called SIL, that is directly in contact with the process liquid and an aspheric lens to shape the image. The measurement volume is hereby optically defined by a very narrow depth of field of some µm in close proximity to the SIL. However, keeping a sharp focus close to the surface of the SIL entirely depends on alignment of the SIL and the aspheric lens with tolerances along the optical axis of only some µm. These tolerances are impractical for an industrial series product. In addition, thermal and mechanical stresses to which in particular an in-line bio-process sensor is subjected during his lifetime as well as aging effects can cause small displacements of the different components relative to each other, limiting the lifetime of the prior art solutions.

As one example, the DE 10 2015 014 110 (DE '110) teaches an in-situ microscope for use in liquids. DE '1 10 teaches, in more detail, to fix the distance of an objective to the SIL by design with 30 µm precision, which, according to the teaching of DE '110, fixes the position of the sharply imaged object planes with about 3 µm accuracy. It is further taught that the overall optical setup no longer requires any adjustment during operation and is therefore suitable as a robust microscope sensor with a long service life.

In addition to the above-mentioned difficulties that even a rigid optical design was observed to become misaligned over time, especially if subjected to changing temperatures, it may be desirable to set the object plane at which a sharp image is taken with higher precision, to have more flexibility in its choice and, in certain applications, to also vary the object plane.

### Summary of invention

The herein claimed invention is defined by the appended claims.

It is an object of the present disclosure to suggest the subject matter initially mentioned. In one aspect, the herein disclosed subject matter shall enable in-situ microscopy in liquids. In another aspect, the herein disclosed subject matter shall overcome at least some of the drawbacks of the art.

This is achieved by the subject matter set forth in the appended claims. Further effects and advantages of the disclosed subject matter, whether explicitly mentioned or not, will become apparent in view of the disclosure provided below.

Disclosed is an objective lens unit for a microscope which is suitable to be used when at least partially submerged in a liquid sample. The suggested objective lens unit comprises an enclosure and certain optical elements arranged inside the enclosure. An immersion lens is positioned adjacent the distal front end of the enclosure. The front end comprises a front end optical aperture of the objective lens unit. The immersion lens is arranged and configured to receive light through the front end optical aperture. The objective lens unit further comprises an objective lens system arranged inside the enclosure and proximal from the immersion lens, wherein the objective lens system is configured to collect light received by the immersion lens through the front end optical aperture. The objective lens system comprises a motorless automated adjustable lens. In particular, the motorless automated adjustable lens is configured to amend the effective focal length of the objective lens system. In particular, the motorless automated adjustable lens configured to axially shift a focal point of the objective lens system relative to the immersion lens. In particular, as the effective focal length of the objective lens unit is influenced by the effective focal length of the objective lens system, the motorless automated adjustable lens can shift the axial position of the object plane and thereby the measurement volume observable with the objective lens unit relative to the immersion lens.

With the use of an immersion lens, a relatively narrow depth of field, typically measuring only some µm along an axial direction, and a field of view captured by a suitable sensor of for instance 150 µm x 150 µm, optically define a narrow sample volume. By using an adjustable lens, the axial position of the object plane, in which objects are sharply imaged on a sensor being arranged in functional relationship with the objective lens unit for recording images can be adjusted. Likewise, by using an adjustable lens, manufacturing tolerances and tolerances or misalignments occurring during the use, such as when the objective lens unit undergoes autoclave treatment or is exposed to thermal or mechanical stress, may be corrected. That means, in other words, the object plane can be defined more precisely with larger acceptable manufacturing and/or assembly tolerances compared to the art, for instance compared with DE '110. In addition, the lifetime and robustness of the objective lens unit respectively the microscope are increased, as appearing misalignments can be corrected with the adjustable lens. The adjustable lens is motorless, meaning size constraints are a minor issue and no vibrations are generated when adjusting the adjustable lens. Examples of motorless automated adjustable lenses are given below.

The immersion lens might be a solid immersion lens, so-called SIL, but may in other instances comprise a liquid immersion lens. In the latter case, the front end optical aperture of the objective lens unit may be closed by a window as the most distal optical component. In this case, there is a gap between the window and the liquid immersion lens. The gap is filled with a liquid. The material of the window, the liquid, and the immersion lens are chosen such that the refractive indices match well-defined relations, wherein the shape and focal length of the immersion lens may further be considered. Persons skilled in the art of microscopy and/or optical engineering are perfectly familiar with the appropriate choice of materials and design.

Solid immersion lenses generally have the shape of truncated spheres, wherein they most commonly comprise one half of a sphere, so called hemispherical SILs, or more than half of a sphere, so-called Weierstrass SILs, also referred to as superhemispherical SILs or superSILs. In this case, the front end optical aperture of the objective lens unit may be closed by a SIL as the most distal optical component. In some embodiments, a solid immersion lens may be cemented to or pressed against a window closing the front end optical aperture. Such a window can be optimised to withstand the conditions of the liquid to be observed, the cleaning procedures commonly used in bioprocessing, delay soiling and/or the attachment of air bubbles. For example, the window can be made of sapphire. In some embodiments, a coating is applied to the SIL to improve the durability and/or the observation conditions, similar as a window. The coating can be an antireflection coating. In this case, the front end optical aperture of the objective lens unit may be closed by a coated SIL or a SIL-window combination as the most distal optical component. Persons skilled in the art of microscopy and/or optical engineering are familiar with the appropriate choice of materials and design to ensure that the optical properties of the SIL-window or SIL-coating combination are still those of a SIL, i.e. enhanced numerical aperture, by ensuring that the index of refraction of the combination remains greater than the one of standard glasses, preferably greater than 1,5. I

A solid immersion lens or SIL provides a high numerical aperture with a comparatively small entrance area, which in turn reduces noise and enhances the resolution. Therefore, objectives incorporating immersion lenses as a front lens have a narrow depth of field. Typically, the depth of field which can be sharply imaged on an optical sensor measures some µm. The field of view captured by a suitable sensor might for instance be 150 µm x 150 µm. Thus, a very narrow sample volume is defined optically and needs not to be mechanically delimited. In the context of cell cytometry, the narrow depth of field largely serves to avoid that cells overlapping each other in the direction of view are captured in an image and thus serves to avoid interferences of overlapping cells.

In embodiments, the objective lens system may comprise, besides the motorless automated adjustable lens, at least one fixed and fixed focal length lens. The at least one fixed and fixed focal length lens may in particular comprise at least one aspheric lens.

As indicated above, the herein described objective lens unit is suitable for use when at least partially submerged in a liquid sample. At least a distal section of the objective lens unit, including the front end optical aperture, is suitable for being submerged in a liquid. Preferably, this distal section is the front end of the enclosure.

Further, at least the enclosure of the objective lens unit is sterilizable, SIP and/or CIP compatible. In some embodiments, the enclosure is a housing which is sterilizable, SIP and/or CIP compatible. In some embodiments, the housing with the objective lens system mounted inside is sterilizable, SIP and/or CIP compatible. In some embodiments, the enclosure comprises a cap and a sleeve and at least the cap is sterilizable, SIP and/or CIP compatible. In some embodiments, the enclosure comprises a cap and a sleeve and at least the cap mounted to the sleeve with the objective lens system provided in the sleeve, is sterilizable, SIP and/or CIP compatible. In embodiments the entire objective lens unit is sterilizable, SIP and/or CIP compatible. It is in particular the use of a motorless automated adjustable lens which allows the sterilizability, the SIP and/or CIP compatibility of entire objective lens units respectively of the parts of the objective lens units comprising the objective lens system. Preventing the need for disassembling of the objective lens unit makes sterilizing, CIP and SIP faster and easier.

Cleaning procedures commonly used in bioprocessing are for example the "Sterilization in Place" (SIP) or "clean in place" (CIP) procedures. Sterilization in Place refers to the sterilization of production equipment without prior disassembly. Sterilization is usually carried out by means of superheated steam, for example with steam at 120°C and 2 bar over a period of about 60 to 70 minutes whereby the exact parameters may vary depending on the application and the system. CIP is often done before the SIP and involves the cleaning of the surfaces to be sterilized. The production equipment is cleaned in a circular or continuous process without prior disassembly and often involves a series of cleaning steps typically comprising the step of rinsing with water, using cleaning agents and using acids.

A part is preferably sterilizable if it can be subject to autoclaving and /or the exposure to ionising radiation such as X-Rays or Gamma radiation without the loss of its functionality. A part is preferably, SIP and/or CIP compatible, if it can be subjected to SIP respectively CIP procedures in the configuration in which it is intended to be used in the process, i.e. in the reactor or in the tube where it is installed for doing measurements, without loss of its functionality.

In a preferred option of at least the objective lens unit or at least parts of its enclosure such as the housing or a cap being SIP and/or CIP compatible, the objective lens unit is particular comfortable to use in a bioprocess, especially if a reusable bioreactor is used: The opening in the process through which a microscope using the objective lens unit is inserted for the measurements remains during the SIP or CIP closed with at least parts of objective lens unit's enclosure, for example the housing or cap, which is at the same time cleaned and sterilized as the rest of the equipment. The preferred option of at least the objective lens unit or at least parts of its enclosure such as the housing or a cap being sterilizable allows to provide objective lens units which are comfortable to use together with single-use bags: In these embodiments, the objective lens unit or at least parts of its enclosure such as the housing or a cap can be mounted to the single-use bag or a suitable adapter and the whole assembly can be sterilized together.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

The enclosure of the objective lens unit may be a housing, wherein the objective lens system is mounted inside the housing. In this embodiment, the housing has a front face. In this embodiment, the front end optical aperture of the objective lens unit is provided in the front face of the housing. This front face of the housing defines the front end of the enclosure. In this embodiment, the immersion lens is arranged adjacent the front end optical aperture. In particular, the immersion lens is mounted to the housing, most preferably such that it forms part of a fluid - proof closure of the front end optical aperture.

In other non-limiting embodiments, enclosure may comprise a sleeve and a cap. The objective lens system is, in these embodiments, provided inside the sleeve. The cap comprises a lateral sheath, a front wall and a rear port. The front end optical aperture of the objective lens unit is provided in the front wall of the cap and the immersion lens is attached to and in particular provided in the cap. The sleeve is at least partially received inside the cap, in particular through the rear port of the cap. In particular, The front wall of the cap forms the front end of the enclosure, in particular if the sleeve is received inside the cap. Preferably, the immersion lens is mounted to the cap such that it forms part of a fluid-proof closure of the front end optical aperture.

In embodiments, the sleeve may be threadedly received inside the cap. A sealing, for instance provided by an O-ring, may be provided between the cap and the sleeve. In other embodiments, the sleeve my simply be plugged into the cap. The sleeve and the cap are preferably equipped with centring means such that the optical axis of the immersion lens and the objective lens system coincide when the sleeve is received inside the cap. Such embodiments are possible due to the adjustability of the motorless automated adjustable lens: relative shifts between the immersion lens and the objective lens system appearing due to mounting the cap to the sleeve can be corrected by the adjustable lens.

The cap may for instance be fixed to a bioreactor and extend through a port of the bioreactor, with the front wall of the cap positioned inside the bioreactor and the rear port of the cap being outside the bioreactor. Preferably, a distal front section of the sleeve is received in the part of the cap positioned inside the bioreactor. Such an embodiment has the advantage that only the cap needs to be sterilized and/or cleaned, as it is only the cap which is in contact with the content of the bioreactors while the sleeve can be removed for SIP, CIP or sterilization. This lowers the requirements on the sleeve and the objective lens system mounted in it to, for example, withstand great temperature changes. In addition, the sleeve may successively be plugged into different cap so as to be used in different bioreactors or at different locations of one bioreactor.

Preferably, at least a distal section of the objective lens unit is liquid- proof. This makes the objective lens unit suitable to be used when at least partially submerged in a liquid sample. In more specific embodiments, the objective lens unit comprises a proximal rear connector interface, wherein at least a section of the objective lens unit excluding the rear connector interface is liquid-proof. Preferably, it is the enclosure and the most distal optical element of the objective lens unit, preferably a window or the immersion lens, which form together a liquid - tight barrier enclosing the space to accommodate the objective lens system. Preferably, there is a sealing between the enclosure, preferably the housing or the cap, and the most distal optical element, preferably a window or the immersion lens. Such a sealing is preferably archived by moulding, by the use of a suitable an adhesive, by an interference fitting or by the arrangement of sealing structures, with or without sealing materials such as O-rings, between the enclosure and the most distal optical element. Preferably the most distal optical element is a SIL. In some embodiments, SIL and at least parts of the enclosure are made of the same material and form a single structure. In embodiments using a cap and a sleeve as housing, either the cap forms the outer surface of the distal section of the objective lens unit or cap and sleeve can be connected in a liquid-proof manner such that, if the cap is mounted as intended, the combination of cap and sleeve forms the liquid-proof distal section of the objective lens unit.

The motorless automated adjustable lens may be a tuneable lens. Tuneable lenses are commercially available. They are configured to controllably change the radius of curvature of at least one of its light-refracting surfaces and thus their focal length. Common tuneable lenses are autoclavable. Tuneable lenses require minimal space, can be used at a wide temperature range and work vibration free.

In other embodiments, it might be provided that the motorless automated adjustable lens comprises a piezo actuator and a lens axially displaceable along an optical axis of the objective lens unit by the piezo actuator. The lens displaceable by the piezo actuator may comprise or be a fixed focal length lens or may comprise or be a tuneable lens. As will be appreciated, piezo actuators require minimal space, can be used at a wide temperature range and work vibration free.

The motorless automated adjustable lens may be arranged between the immersion lens and a fixed lens of the objective lens system. The term "fixed lens" refers to a lens with a fixed, i.e. stationary, location in the objective lens system and a fixed focal length. More in particular, the motorless automated adjustable lens may be the next lens proximal from the immersion lens.

The most distal optical element of the objective lens unit, e.g., in particular a window or the immersion lens, may be flush with a distal outer surface of the front end of the enclosure. Preferably, this distal outer surface is the distal outer surface of the front face of the housing or the distal outer surface of the front wall of the cap, respectively. This results in a smooth distal tip of the objective lens unit, which increases robustness of the objective lens unit and significantly reduces the risk of building up dirt depositions and reduces vortices around the distal tip of the objective lens unit when placed in a liquid flow.

The front end or distal tip of the enclosure may in this respect be flat or convexly shaped. While a flat front end needs less space, a convexly shaped front end might create less disturbances in a liquid flow, reducing the risk of gas bubbles sticking to it.

A circumferential outer wall of the objective lens unit may be circular-cylindrical with an outer diameter of 25 mm or less and in particular 12 mm or less. This allows the objective lens unit to be inserted into a bioreactor through standard ports, such as Ingold standard access ports and Eldon-James ports.

Further exemplary embodiments of the herein described objective lens unit comprise at least two motorless automated adjustable lenses arranged laterally offset from each other and controllable independent from each other. These may be operated to simultaneously image objects in different object planes on a sensor. Such operation enables, for instance, to collect images from one biological cell from different perspectives, i.e., to perform cell tomography. It also enables to collect images of a statistically useful number of cells even at low cell densities.

Alternatively, a broadband or multi-colour light source may be used to illuminate the sample, and along an optical path from the front end optical aperture to the sensor the light from the sample volume may be split, for instance using a beam splitter. Elements which allow to select different narrow light wavelength ranges, such as for instance, while not limited to, filters, may be arranged in the thus generated different optical paths. Images at different light wavelength may thus be processed. If the different wavelengths are sufficiently far apart, the images at different wavelengths would originate from different object planes due to chromatic aberration. In still further embodiments, the optical path may be divided, for instance using beam splitters, and different lenses might be arranged in the different optical paths so as to generate different object planes imaged on a sensor through the different optical paths.

The herein suggested objective lens unit may in further embodiments comprise a sample illumination unit. The sample illumination unit comprises an illumination source and a means for coupling light from the illumination source into the objective lens unit. The means for coupling light from the illumination source into the objective lens unit is configured to project said light into a proximal-distal direction of the objective lens unit and towards the immersion lens. In embodiments, the means for coupling light from the illumination source into the objective lens unit may be arranged between the immersion lens and the motorless automated adjustable lens. Light for illuminating a sample may then exit the front end optical aperture of the objective lens unit. The means for coupling light from the illumination source into the objective lens unit may be a beam splitter. The illumination source, for instance an LED, may be functionally coupled to the means for coupling light from the illumination source into the objective lens unit and may be placed laterally from the optical path of the objective lens unit. In other embodiments, however, for instance fibre optics may be applied to couple light from the illumination source into the objective lens unit or into the means for coupling light from the illumination source into the objective lens unit.

In further embodiments, a mirror may be provided distal from the front end of the enclosure and positioned in an extension of the optical axis of the objective lens unit. In embodiments, the adjustable lens is set such that the object plane which is sharply imaged on a sensor is closer to the front end of the enclosure than the mirror. In these cases, where a mirror is provided distal from the front end, biological cells in the sample volume are illuminated by light emitted through the front end of the enclosure and by light reflected by the mirror. Hence the objects are essentially observed by two types of microscopes at once: a reflected light microscope on the path from the light source to the mirror, and a transmitted light microscope on the path from the mirror to the detector. This creates two images at once: A situation which is in general assumed to be disadvantageous and corrected by polarisation filters or similar means to filter out one of the two images. However, it was recognised that biological cells scatter light significantly more in the forwards than backwards, resulting in a situation where the image created by the reflected light does not influence the evaluation of the dominating, transmitted light image for the purpose of cell cytometry. Therefore, the use of the robust and space saving illumination with a mirror, as described above, is preferred for the use of an in-situ microscope for cell cytometry measurements.

In another aspect, a cap is suggested which is configured to be a part of an objective lens unit having an enclosure comprising a sleeve and a cap, as described above. The cap comprises a front end and a lateral sheath extending axially from the front end. A front end optical aperture is formed in the front end and an immersion lens is attached to the front end in a functional relationship with the front end optical aperture, such that light from the front side of the cap and outside the cap passing through the front end optical aperture and into the interior of the cap passes through the immersion lens. The lateral sheath is configured to receive a sleeve therein, wherein the cap is configured to receive the sleeve in an axial direction from a back end of the cap. Benefits and embodiments of a cap of the suggested kind are outlined above in connection with an objective lens unit having an enclosure comprising a sleeve and a cap.

In embodiments, one or more optically detectable targets may be provided on the most distal optical element of the objective lens unit. This optical component can be the immersion lens, in particular the solid immersion lens of the cap or the objective lens unit or a window arranged distally of or directly on the immersion lens. These targets allow an assembled microscope system to determine which state of the motorless automated adjustable lens places the objective plane on this distal surface defined by the targets. To do so, said microscope system comprises in addition to the objective lens unit also an optical sensor, a control unit configured to control the motorless automated adjustable lens and further means configured to evaluate and/or transmit optical data collected and recorded by the optical sensor. These further means comprise in this embodiment an image processing unit configured to detect the targets on an image captures by the optical sensor. Such means to determine the distance between most distal optical element and the objective lens system at least indirectly are especially beneficial if the two components are arranged relative to each other by the user, such as in the case of embodiments using a cap or after events, such as a cleaning, SIP or CIP cycle, where thermal or mechanical stresses might have caused movements of parts of the objective lens unit relative to each other.

In still another aspect, disclosed is a microscope for in-situ application inside a bioreactor. The microscope comprises an objective lens unit of any kind described above and an optical sensor. Preferably, the distal end of the microscope is formed by the front end of the enclosure. In some embodiments however, the microscope is further equipped with a shield or an illumination device which extends further distal than the front end of the enclosure. The optical sensor is functionally coupled to the objective lens unit to receive light transmitted from a front side of the objective lens unit and through the objective lens unit. In particular, the optical sensor is functionally coupled to the objective lens unit to receive light transmitted through the immersion lens and through the objective lens system. For example, the optical sensor can be coupled to the rear connector interface of the objective lens unit. In particular aspects, the microscope may be configured for attaching it to a bioreactor comprising a standard port, wherein the microscope is further configured such that at least a distal section of the objective lens unit, i.e., in particular the section comprising the front end optical aperture and the immersion lens, may be positioned inside the bioreactor, whereas a microscope head and/or the rear connector interface may be located outside the bioreactor. Preferably, the microscope head or the rear connector interface comprises the interface to receive and transmit data and/or power. The microscope may further include a sample illumination unit comprising an illumination source and a means for coupling light from the illumination source into the objective lens unit. The sample illumination unit may in instances be arranged in a microscope head or in the objective lens unit, as described above or be coupled to the rear connector interface. The optical path of the light emitted from the sample illumination unit and the optical path of the light collected from the sample preferably coincide at least along sections of the respective optical paths. The optical sensor may in particular comprise an image sensor and more in particular a CCD or CMOS image sensor. The optical sensor may be arranged in a microscope head, may be coupled to the rear connector interface or may be integrated in the objective lens unit.

The microscope may further comprise a control unit functionally coupled to the objective lens unit and configured to control the motorless automated adjustable lens. The microscope may further include control hardware configured to control the sample illumination unit and the optical sensor, and further means configured to evaluate and/or transmit optical data collected and recorded by the optical sensor. Preferably, the control unit, the control hardware and/or further means configured to evaluate and/or transmit optical data are arranged in the microscopy head or coupled to or be part of the rear connector interface.

In still further aspects, methods for performing cytometry are suggested. In one aspect, the method comprises using a microscope as described above. The method further comprises inserting at least a distal section of the objective lens unit through a port of a bioreactor and submerging at least a part of the distal section of the objective lens unit, including the front end and the front end optical aperture, in a sample liquid contained inside the bioreactor. The motorless automated adjustable lens is operated to adjust an object plane which is sharply imaged on the optical sensor. Once the object plane is set correctly, at least an image generated by the objective lens unit is recorded using the optical sensor.

In another aspect, a microscope as set forth above is used, wherein the objective lens unit comprises a cap and a sleeve, as outlined above. The method comprises inserting at least a distal section of the cap through the port of a bioreactor and sealing the port of the bioreactor with the cap. The rear port of the cap is maintained outside the bioreactor. At least a part of the distal section of the cap including the front wall with the front end optical aperture is submerged in a sample liquid inside the bioreactor. The sleeve comprising the objective lens system is inserted into the cap. The motorless automated adjustable lens is operated to adjust an object plane which is sharply imaged on the optical sensor, and at least an image generated by the objective lens unit is recorded using the optical sensor.

A sample illumination unit may be intermittently operated. The illumination source may emit light pulses of 20 µs or less duration, and in more particular embodiments light pulses of 10 µs or less duration. The resulting short illumination times enable to capture clear images even when the cells in the sample volume move. Pulsed operation of the illumination source with short, microsecond, pulse durations enable to obtain the desired stroboscopic effect independent from the frame rate of the sensor. On the other hand, blurredness of the images with longer illumination time may be used to determine flow velocity through the sample volume.

Capturing monochromatic images or images using light in a narrow wavelength range may serve to avoid chromatic aberration, and thus to further increase image quality. This might be achieved by emitting monochromatic or low bandwidth light from the sample illumination source, using filters, or a combination thereof. However, as outlined above, in certain applications it might be useful to capture pictures at at least two sufficiently different wavelengths, thus using chromatic aberration to simultaneously retrieve pictures from two different object planes.

In certain further applications, the objective lens unit and the control unit for controlling the motorless automated adjustable lens may be configured to automatically adjust the object plane at which a sharp image is received by the optical sensor. To this extent, at least one optically detectable reference structure may be provided in the optical path of the objective lens unit. The control unit for controlling the motorless automated adjustable lens may then first adjust the motorless automated adjustable lens such that a sharp image of at least one reference structure is obtained on the optical sensor. The motorless automated adjustable lens may subsequently be adjusted to obtain a sharp image of objects at a desired distance distal from the reference structure, or from the front end of the enclosure, respectively.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

- Fig. 1: A microscope arranged for in-situ cytometry inside a bioreactor;
- Fig. 2: a first exemplary embodiment of an objective lens unit of the type herein suggested;
- Fig. 3: a second exemplary embodiment of an objective lens unit of the type herein suggested;
- Fig. 4: Detail of an exemplary embodiment of the arrangement of an immersion lens and front end optical aperture of an objective lens unit of the type herein suggested;
- Fig. 5: A further embodiment of an objective lens unit of the type herein suggested which includes a sample illumination unit and a mirror arranged distal from the front end optical aperture;
- Fig. 6: A further possible arrangement of a mirror distal from the front end optical aperture;
- Fig. 7: An exemplary embodiment of an objective lens unit having a different tip geometry;
- Fig. 8: A view along an optical axis of an objective lens unit having focussing targets.

It is understood that the drawings are partly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

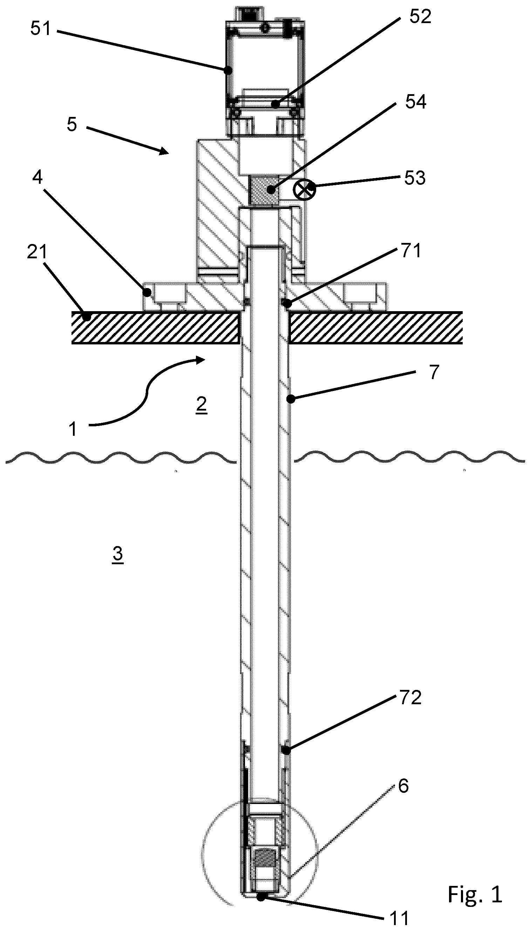

Figure 1 shows a microscope 1 mounted to wall 21 of tank 2 and extending through wall 21 into tank 2 and into sample liquid 3 contained in tank 2. Microscope 1 is attached to wall 21 of tank 2 by flange 4. Head 5 of microscope 1 is arranged outside tank 2. Camera 51 is mounted at a proximal end of microscope 1 and provides optical sensor 52. A distal end 11 of microscope 1 is provided by objective lens unit 6. Objective lens unit 6 and head 5 are connected by hollow shaft 7. O-ring sealings 71 and 72 are provided at the respective connections between shaft 7 and head 5 and shaft 7 and objective lens unit 6, respectively. Light collected by objective lens unit 6 at distal end 11 of microscope 1 passes along an optical path through hollow shaft 7 and is projected onto optical sensor 52 of camera 51. Optical sensor 52 and camera 51 are configured to capture or record light, or an image of an object, projected on optical sensor 52. Illumination source 53 is mounted to head 5 lateral from the optical path. Beam splitter 54 is arranged inside head 5 in in the optical path of light from objective lens unit 6 to optical sensor 52. Beam splitter 54 serves as a means for coupling light from illumination source 53 into objective lens unit 6 and deflects part of the light from illumination source 53 towards objective lens unit 6, where the light exits microscope 1 at distal end 11 and illuminates a sample volume of liquid 3. Light from the thus illuminated sample volume of liquid 3 enters microscope 1 at distal end 11 thereof and travels through objective lens unit 6 and hollow shaft 7 towards optical sensor 52. The light travelling back is partially deviated by beam splitter 54, while another share of the light from the sample volume travels to camera 51 and is captured by optical sensor 52. Thus, magnified views of objects in liquid 3 can be imaged and images be recorded by camera 51. The illumination and image optical paths coincide in large sections of the setup, that is, in the present depiction, below beam splitter 54. Tank 2 might be a bioreactor. Liquid 3 might hence contain biological cells. Cells might be observed in situ by use of the shown microscope 1. Microscope 1 thus enables in-situ cytometry. Illumination source 53 might be pulsed. One single pulse of typically some 10 µs duration might be emitted by illumination source 53 per frame captured by camera 51. Hence, clear and sharp images of even strongly magnified objects may be obtained, even if the objects move. On the other hand, longer illumination times or multiple illumination pulses per frame recorded by camera 51 may assist in determining flow velocity and direction through the sample volume.

Light source 53 might emit monochromatic light or light at a narrow bandwidth to avoid chromatic aberration effects. Alternatively, a bandpass optical filter might be arranged in the illumination and/or imaging light path. In other embodiments, the sample volume might be illuminated by a broadband light source or a multi-colour light source, and optical sensor 52 might receive light at different wavelengths. Due to chromatic aberration, the distance of the object plane from which a sharp image is received on optical sensor 52 from the distal end 11 of microscope 1 is different for the different wavelengths, or colours. Thus, if light with sufficiently different wavelengths is used, some kind of 3D information of objects might be obtained.

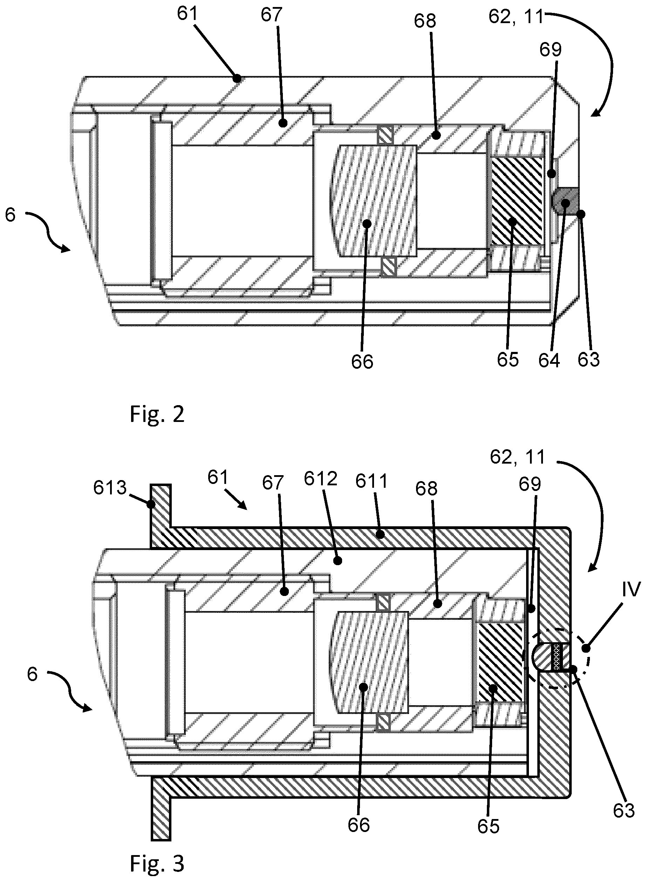

Figure 2 shows a more detailed view of objective lens unit 6. Exemplarily shown embodiment of objective lens unit 6 comprises enclosure 61 including optical components 64, 65 and 66. Front end optical aperture 63 is provided through a front end 62 of enclosure 61 of objective lens unit 6, or distal end 11 of microscope 1, respectively. Light from illumination source 53 may exit objective lens unit 6 through front end optical aperture 63 and light from a sample volume may enter objective lens unit 6 through front end optical aperture 63. A solid immersion lens 64 is arranged inside front end optical aperture 63 to receive light through front end optical aperture 63. Solid immersion lens 64 yields multiple purposes. On the one hand, a solid immersion lens provides a high numerical aperture with a comparatively small entrance area, which in turn reduces noise. On the other hand, objectives incorporating immersion lenses as a front lens have a narrow depth of field. Typically, the depth of field which can be sharply imaged on an optical sensor measures some µm. The field of view captured by a suitable sensor might for instance be 150 µm x 150 µm. Thus, a very narrow sample volume is defined optically and needs not to be mechanically delimited. The narrow depth of field largely serves to avoid that cells overlapping each other in the direction of view are captured in an image and thus serves to avoid interferences of overlapping cells. Optical components 65 and 66 jointly form an objective lens system arranged to collect light received by immersion lens 64 through front end optical aperture 63. A disadvantage of using immersion lenses at the front end 62 of enclosure of objective lens unit 6 is that position tolerances of the arrangement of optical components 65 and 66 relative to immersion lens translate into a large variance of the position of the object plane which is sharply imaged on the optical sensor, and hence of the sample volume. DE 10 2015 014110 for instance states that 30 µm precision is required to define the object plane with about 3 µm accuracy. This, however, turns manufacturing such objective lens units with immersion lenses units expensive and makes such prior objective lens units sensitive to changing conditions such as aging and temperature variations.

The herein suggested subject matter mitigates these issues. Lens 65 is a motorless automated adjustable lens. In embodiments, as in the shown example, a tuneable lens is used. It was shown that with off-the-shelf tuneable lenses manufacturing and assembly tolerances of 1 mm and more may be compensated by the change of focal length of the tuneable lens. In addition, they are in general autoclavable. In other embodiments, the adjustable lens might be displaceable along the axis of the objective lens unit by a piezo actuator. Both exemplary solutions can be implemented inside the compact enclosure of the objective lens unit and may operate without vibrations. Tuneable lens 65 is provided next to immersion lens 64, with a small air gap 69 between tuneable lens 65 and immersion lens 64 such that deformation of the tuneable lens surface is not impeded by immersion lens 64. Lens 66 is arranged proximal of tuneable lens 65 and is for instance an aspheric lens. Lenses 65 and 66 are held in place by threaded sleeve 67, which is screwed into enclosure 61, and distance sleeve 68 to maintain the distance between aspheric lens 66 and tuneable lens 65. The distal or front surface of immersion lens 64, being the most distal optical element in the illustrated embodiment, is flush with an outer surface of a distal front end of enclosure 61. Thus, local turbulences in the liquid flow are avoided during the measurements, less dirt can accumulate and the objective lens unit 6 is easier to clean.

In another embodiment shown in figure 3, enclosure 61 comprises cap 611 and sleeve 612. Cap 611 comprises a distal front end and a lateral sheath. In the illustrated embodiment a flange 613 extends radially outward at a proximal, rear end of the lateral sheath. The objective lens system, comprising tuneable lens 65 and aspherical lens 66, is provided inside sleeve 612. Generally, the assembly of the objective lens system is similar to that outlined in connection with figure 2. Sleeve 612 with the optical lens system provided therein may be inserted into cap 611 through a rear port of cap 611. In some embodiments, the cap 611 and the sleeve 612 are connected via a thread. This can be done similar to the embodiment of Fig. 1 where the objective lens unit 6 is mounted to the hollow shaft 7. In some embodiments, the cap 611 is connected directly to the hollow shaft 7, preferably via a thread, while the sleeve 612 is arranged between cap 611 and hollow shaft 7. In these cases, the sleeve 612 can be essentially a carrier and mounting device for the objective lens system, attachable to either the cap 611 or the hollow shaft 7 before cap 611 and hollow shaft 7 are connected with each other; preferably, the shaft 612 is mounted to the hollow shaft 7 first, as this allows to establish the connections needed for the motorless adjustable lens. Especially if the cap 611 is connected either directly or via the sleeve 612 to the hollow shaft 7, it often does not comprise a flange but instead sealing and mounting means, such as O-Rings and threads, to ensure a preferably fluid-proof connection between the cap 611 and the sleeve 612 respectively the hollow shaft 7. In some embodiments, the front end optical aperture 63 is provided in the distal front end of cap 611.

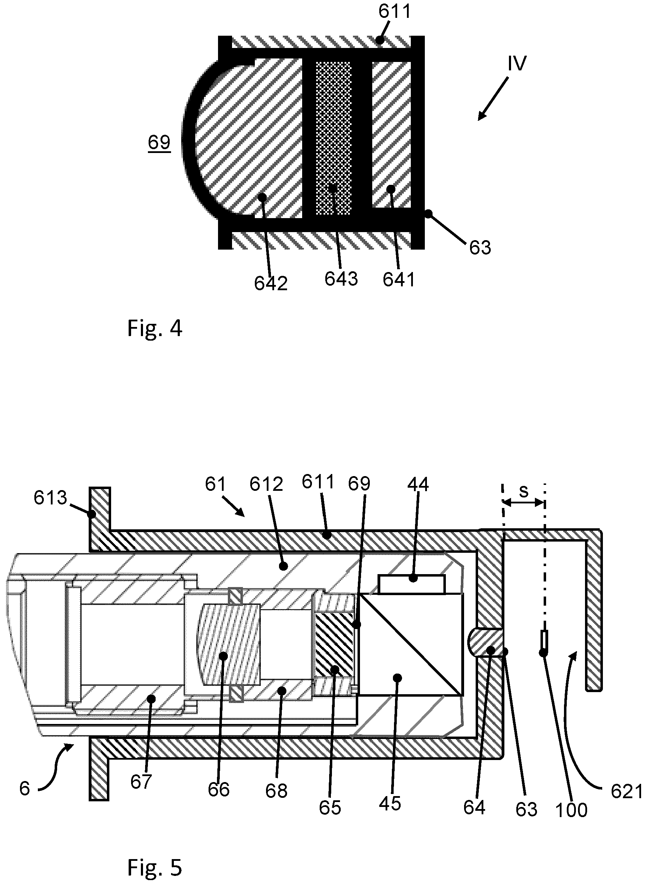

Turning to figure 4, detail IV is discussed. Plan window 641 closes front end optical aperture 63 distally and is provided flush with a distal outer surface of the front end of cap 611. Liquid immersion lens 642 is provided proximal to window 641 with a gap 643 provided between liquid immersion lens 642 and window 641. Gap 643 is filled with an immersion liquid, such as oil, water, silicon or the like. The refractive indices of window 641, liquid immersion lens 642 and the immersion liquid inside gap 643 and the geometry of liquid immersion lens 642 are chosen to match well-defined relations, well-known to a person skilled in the art of microscopy and/or optical engineering. In still other embodiments, a solid immersion lens may be cemented to or pushed against a window distally closing the front end optical aperture. In these cases, there is no gap 643. Instead of a window, a solid immersion lens may be coated. Both, windows and coatings may be chosen to protect the material of the immersion lens or to improve the measurement conditions by delaying soiling or reducing the likelihood of air bubbles sticking to the most distal optical element. It is noted that these exemplary immersion lens assemblies may, of course, also be used in connection with an enclosure as shown in figure 2.

As is also seen in figure 4, air gap 69 is provided proximally adjacent immersion lens 642. Turning again to figure 3, it is seen that tuneable lens 65 is provided next to immersion lens 642. Sleeve 612 with the objective lens system may be functionally connected to an optical sensor at its proximal end such that an image transmitted through objective lens unit 6 may be captured by the optical sensor. For a non-limiting instance, a proximal end of sleeve 612 may be connected to a shaft 7, which in turn is connected to a microscope head 5, as shown in figure 1. A distal section of cap 611 may be inserted into a bioreactor through a port thereof and may be submerged in a sample liquid. Flange 613 remains outside the bioreactor and serves to fix cap 611 to the bioreactor. A rear port of cap 611 thus is provided outside the bioreactor. Cap 611 is, apart from the rear port, liquid-proof. Sleeve 612 with an optical sensor functionally connected thereto may be inserted into cap 611 from outside the bioreactor to jointly form a microscope suitable for in situ cytometry. The objective lens system and all components attached thereto are protected from contact with the liquid inside the bioreactor.

Still a further exemplary embodiment of objective lens unit 6 is illustrated in figure 5. An illumination unit comprising illumination source 44 and beam splitter 45 as a means for coupling light from illumination source 44 into objective lens unit 6 is provided in objective lens unit 6. Beam splitter 45 is arranged in the optical path of objective lens unit 6, while illumination source 44 is arranged lateral of the optical path. As will be appreciated, beam splitter 45 deflects part of the light from illumination source 44 in a forward or distal direction of objective lens unit 6 and towards immersion lens 64. Light is emitted through front end optical aperture 63 in a forward or distal direction of objective lens unit 6. Objective lens unit, through tuneable lens 65, is adjusted such that an object plane is located a distance s distal to front end optical aperture 63. A sample volume 100 is thus sharply imaged on an optical sensor functionally coupled to objective lens unit 6 and proximal from objective lens unit 6. The typical size of sample volume 100 is discussed above. However, back scatter from the biological cells in the sample volume may generally be low due to the small size and low difference in refractive index between the cells and the liquid in which the cells are suspended. Thus, a mirror 621 is provided cantilevering from enclosure 61 of optical lens unit 6 and arranged in the optical axis of objective lens unit 6. It is understood that mirror 621 together with a cantilevering beam might be screwed or otherwise mounted to enclosure 61 of optical lens unit 6. Mirror 621 is arranged such that at least a part of the light emitted through front end optical aperture 63 is reflected back into front end optical aperture 63. Said reflected light passes through sample volume 100. Biological cells contained in sample volume 100 are thus illuminated from distal. Hence, forward scattered light from biological cells or other particles in sample volume 100 is received by optical lens unit 6 and imaged on an optical sensor functionally connected to the rear or proximal end of objective lens unit 6. The intensity of forward scattered light may be orders of magnitude higher than that of the backward scattered light. Consequently, the forward scattered light dominates the backward scattered light in the image on the optical sensor. This allows to improve the quality of the cytometry using the strong signal obtained by transmission microscopy. At the same time, there is no need to provide of a light source outside of the objective lens unit and inside the liquid to be observed or to provide means to separate the reflectance image from the transmission image, such as polarisation filters. Thereby a particular robust and compact illumination system and microscope is provided.

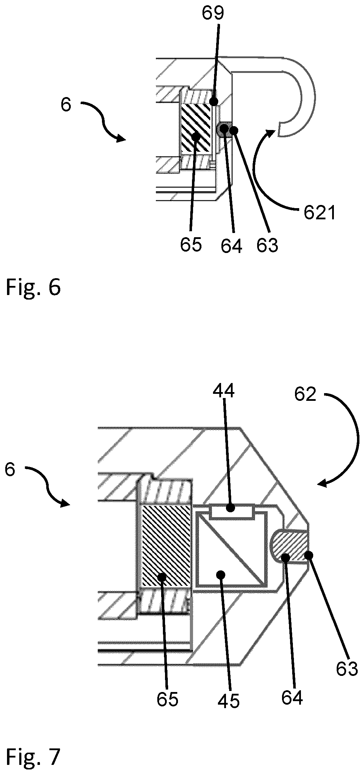

As illustrated in figure 6, mirror 621 may for another non-limiting instance also be provided on a U-shaped carrier. This can minimize the influence on flow of the liquid to be observed. In any embodiments, it may moreover be provided that the distance between front end optical aperture 63 and mirror 621 may be varied.

Figure 7 illustrates an embodiment in which front end 62 of the enclosure of the objective lens unit 6 is not flat, as shown in the examples of figures 2 through 6, but is generally convex, for instance conical. For other non-limiting instances, the front end 62 of the enclosure of the objective lens unit 6 may be rounded, for instance dome-shaped. A dome-shaped or a convex shape can help to minimize the impact on the flow of the liquid to be observed and can help to reduce the likelihood of gas bubbles sticking to the front end 62.

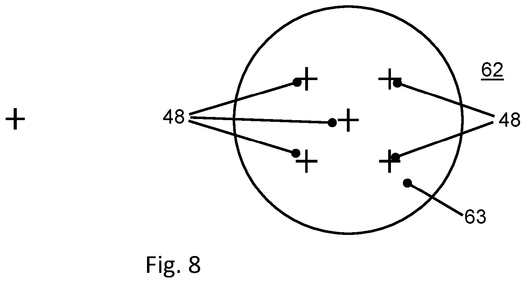

Figure 8 shows a plan view onto distal or front end 62 of enclosure of the objective lens unit 6. In embodiments of the herein disclosed subject matter, one or more optically detectable targets 48 may be provided on a distal surface of the optical component distally closing front end optical aperture 63, e.g. solid immersion lens 64 of figures 2, 5, 6 and 7 or window 641 of the embodiment illustrated in figures 3 and 4. In a mode of operating a microscope including said objective lens unit, tuneable lens 64 or other motorless automated adjustable lens may be adjusted to generate a sharp image of targets 48 on the optical sensor and subsequently adjust said tuneable lens 64 or other motorless automated adjustable lens to set the objective plane a defined distance distal from front end optical aperture 63 such that a sample volume located said distance distal from front end optical aperture 63 is sharply imaged on the optical sensor. Thus, an autofocus operation may be realized.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 1: Microscope
- 2: Tank, bioreactor
- 3: Sample liquid
- 4: Flange
- 5: Head of microscope
- 6: Objective lens unit
- 7: Shaft
- 11: Distal end of microscope
- 21: Wall of tank or bioreactor
- 44: Illumination source
- 45: Means for coupling light from illumination source into objective lens unit; beam splitter
- 48: Target
- 51: Camera
- 52: Optical sensor
- 53: Illumination source
- 54: Means for coupling light from illumination source into objective lens unit; beam splitter
- 61: Enclosure
- 62: front end of the enclosure of the objective lens unit
- 63: Front end optical aperture
- 64: Solid immersion lens
- 65: Optical component, motorless automated adjustable lens
- 66: Optical component, aspheric lens
- 67: Threaded sleeve
- 68: Distance sleeve
- 69: Air gap
- 71: O-ring sealing
- 72: O-ring sealing
- 611: Cap
- 612: Sleeve
- 613: Flange of cap
- 621: Mirror
- 641: Plan window
- 642: Immersion lens
- 643: Liquid-filled gap
- 100: Sample volume
- s: Distance from front end of enclosure to sample volume

## Claims

1. Objective lens unit (6) for a microscope (1), the objective lens unit suitable to be used when at least partially submerged in a liquid sample (3), the objective lens unit comprising an enclosure (61),
the objective lens unit comprising an immersion lens (64, 642) positioned adjacent a distal front end (62) of the enclosure (61), the front end comprising a front end optical aperture (63) of the objective lens unit and the immersion lens arranged and configured to receive light through the front end optical aperture,
the objective lens unit further comprising an objective lens system (65, 66) arranged inside the enclosure (61) and proximal from the immersion lens (64, 642), wherein the objective lens system is configured to collect light received by the immersion lens (64, 642) through the front end optical aperture (63),
wherein the objective lens system comprises a motorless automated adjustable lens (65).

2. Objective lens unit according to the preceding claim, wherein the enclosure (61) is a housing, the objective lens system (65, 66) mounted inside the housing, the housing having a front face, wherein the front end optical aperture (63) of the objective lens unit is provided in the front face of the housing and the immersion lens (64, 642) is arranged adjacent the front end optical aperture (63).

3. Objective lens unit according to claim 1, the enclosure (61) comprising a cap (611) and a sleeve (612), wherein the objective lens system (65, 66) is provided inside the sleeve, the cap comprising a lateral sheath, a front wall and a rear port, wherein the front end optical aperture (63) of the objective lens unit is provided in the front wall of the cap and the immersion lens (64, 642) is attached to the cap (611), wherein the sleeve (612) is at least partially received inside the cap (611).

4. Objective lens unit according to any preceding claim, wherein at least a distal section of the objective lens unit is liquid-proof.

5. Objective lens unit according to any of the preceding claims, wherein the motorless automated adjustable lens (65) is a tuneable lens.

6. Objective lens unit according to any preceding claim, wherein the motorless automated adjustable lens (65) is a lens axially displaceable along an optical axis of the objective lens unit (6) by a piezo actuator.

7. Objective lens unit according to any preceding claim, wherein the motorless automated adjustable lens (65) is arranged between the immersion lens (64, 642) and a fixed lens (66) of the objective lens system, wherein in particular the motorless automated adjustable lens is the next lens proximal from the immersion lens.

8. Objective lens unit according to any preceding claim, wherein the most distal optical element (64, 641) of the objective lens unit is flush with a distal outer surface of the front end (21) of the enclosure.

9. Objective lens unit according to any preceding claim, wherein the front end (21) of the enclosure is one of flat and convexly shaped.

10. Objective lens unit according to any preceding claim, comprising a sample illumination unit, wherein the sample illumination unit comprises an illumination source (44) and a means (45) for coupling light from the illumination source (44) into the objective lens unit (6), wherein the means for coupling light from the illumination source into the objective lens unit is configured to project said light into a proximal-distal direction of the objective lens unit and towards the immersion lens (64, 642) and is preferably arranged between the immersion lens (64, 642) and the motorless automated adjustable lens (65).

11. A cap (611) configured for an objective lens unit according to claim 3 or according to any of claims 4 through 10 when dependent upon claim 3, wherein the cap comprises a front wall and a lateral sheath extending axially from the front wall, wherein an front end optical aperture (63) is formed in the front wall and an immersion lens (64, 642) is attached to the front wall in a functional relationship with the front end optical aperture (63) such that light from the front side of the cap and outside the cap passing through the front end optical aperture and into the interior of the cap passes through the immersion lens, and wherein the lateral sheath is configured to receive a sleeve (612) therein wherein the sleeve is insertable in an axial direction from a back end of the cap.

12. Microscope (1) for in-situ application inside a bioreactor, the microscope comprising an objective lens unit (6) according to any of claims 1 through 10 and an optical sensor (52), wherein the optical sensor is functionally coupled to the objective lens unit to receive light transmitted from a front side of the objective lens unit and through the objective lens unit.

13. Microscope according to the preceding claim, wherein the microscope comprises a control unit functionally coupled to the objective lens unit (6) and configured to control the motorless automated adjustable lens (65).

14. Method of performing cytometry using a microscope according to any of claims 12 and 13, the method comprising inserting at least a distal section of the objective lens unit (6) through a port of a bioreactor (21) and submerging at least a part of the distal section of the objective lens unit (6) including the front end (21) and the front end optical aperture (63) in a sample liquid (3) contained inside the bioreactor, operating the motorless automated adjustable lens (65) to adjust an object plane sharply imaged on the optical sensor (52), and recording at least one image generated by the objective lens unit (6) using the optical sensor.

15. Method of performing cytometry using a microscope (1) according to any of claims 12 or 13 wherein the objective lens unit (6) is an objective lens unit according to claim 3 or any of claims 4 through 10 when dependent upon claim 3, the method comprising inserting at least a distal section of the cap (611) through the port of a bioreactor and sealing the port of the bioreactor with the cap, maintaining the rear port of the cap (611) outside the bioreactor, submerging at least a part of the distal section of the cap (611) including the front wall with the front end optical aperture (63) in a sample liquid (3) inside the bioreactor, inserting the sleeve (612) comprising the objective lens system (65, 66) into the cap (611), operating the motorless automated adjustable lens (65) to adjust an object plane which is sharply imaged on the optical sensor (52), and recording at least one image generated by the objective lens unit using the optical sensor.
